# EUROPEAN PATENT APPLICATION

(11) **EP 3 270 122 A1**
(43) Date of publication of application: **17.01.2018**
(21) Application number: 16179217.1
(22) Date of filing: 13.07.2016
(51) Int. Cl.: G01F 23/20, F17C 13/02, G01G 17/04

(54) **MONITORING CONTENT OF LIQUID FILLED TANKS**

(71) Applicant: Memeteau, Michael, 1000-008 Lisboa (PT)
(72) Inventor: Memeteau, Michael, 1000-008 Lisboa (PT)
(74) Representative: ZBM Patents - Zea, Barlocci & Markvardsen

(57) **Abstract**

Devices and methods for monitoring content of a liquid filled tank (LFT) are proposed. In example implementations a weight measurement of the liquid filled tank is performed. The performed weight measurement is compared with one or more previously performed measurements. Following the comparison, a status of the liquid filled tank is identified based on said comparison. In some implementations the methods and devices may be used to detect leaks of the LFT.

## Description

The present disclosure relates to methods and devices for monitoring content of liquid filled tanks (LFT), such as liquefied (or liquid) petroleum gas (LPG) tanks, liquefied (or liquid) natural gas (LNG) tanks, containers or cylinders or drink kegs, e.g. beer kegs.

### BACKGROUND

Liquid filled tanks have a very wide variety of uses, mainly used for cylinders across many different markets. Example use of LPGs or LNGs is as efficient fuel containers in the agricultural, recreation, hospitality, calefaction, construction, sailing and fishing sectors. They can serve as fuel for cooking, central heating and to water heating and are a particularly cost-effective and efficient way to heat off-grid homes. Another example are drink kegs, constructed of aluminum or steel. They are commonly used to store, transport, and serve beer. Other alcoholic or non-alcoholic drinks, carbonated or non-carbonated, may be housed in a keg as well. Such liquids are generally kept under pressure.

LFTs may come at a variety of sizes and weights. They are typically installed at domestic, commercial or industrial installations and are replaced when exhausted. After installation, users may not be aware of the remaining content or the expected exhaustion time.

It would be desirable to provide content monitoring for LFTs.

### SUMMARY

In a first aspect, a method of monitoring content of a liquid filled tank is provided. The method comprises performing a weight measurement of the liquid filled tank, comparing said performed weight measurement with one or more previously performed measurements and identifying a status of the liquid filled tank based on said comparing. The status may be one of a normal consumption or abnormal consumption (e.g. due to a leak) and/or of a replacement indicator.

In some examples, identifying the status of the liquid filled tank may comprise identifying a remaining quantity of liquid in the liquid filled tank. The remaining quantity may be explicit or implicit. An amount of liquid or a percentage of liquid remaining in the tank may be provided.

In some examples the method may further comprise calculating a depletion rate. As previous content or weight values may be stored, it may be possible to calculate a depletion rate. Thus it may estimate an exhaustion time. Estimating an exhaustion time may facilitate ordering and replacement of LFTs.

In some examples the method may further comprise identifying a leaking status based on the calculated depletion rate. Depletion rates of normal consumption may differ from depletion rates due to a leaking condition. Thus, calculation of the depletion rate may provide indications and alarms of a potential leaking status of the LFT. Identifying a leaking status based on a depletion rate may comprise determining a frequency of measurement. For example, a low depletion rate (e.g. of 15 gr/h) when using a frequency of measurement of, e.g., one measurement per minute, may provide an indication of a leak.

In some examples, the method may also comprise a learning process. During a learning process the method may comprise more frequent measurements, e.g. one measurement every half a minute, which may space out in time if no change in the depletion rate is detected after a number of measurements. Then, when consumption is detected, the frequency of measurements may increase to match the measured consumption pattern with known consumption patterns. By increasing the frequency and comparing a pattern of measurements with previous patterns (learnt or recorded) it may be possible to identify possible leaks that may not comply with past usage patterns. The variation of the frequency of measurements may reduce the energy consumption of the device used to perform the measurements while providing more accurate identifications of consumption patterns and more precise distinctions between normal consumption conditions and leaking conditions.

In some examples the method may further comprise transmitting the status of the liquid filled tank to a back-end. This may facilitate monitoring of various LFTs and may also allow unattended functioning of the LFTs.

In some examples, to transmit the status using a wireless transmitter, the method may further comprise identifying a location of the LFT, identifying a receiver location of the back-end and identifying a position on the LFT to place the transmitter and placing the receiver on the identified position on the LFT. As the LFTs are typically metallic, it may be useful to avoid any transmission through the LFT. By knowing the locations of both LFT and receiver it may be possible to identify an area on the LFT where the transmission will not need to pass through the LFT to reach the receiver of the back end. Thus interference of a low power transmission may be minimized. Identifying a position on the LFT may comprise Identifying an external area of the LFT where any direct line from the receiver location does not pass through the LFT. Then a position on the identified LFT external area may be selected.

In another aspect, a device for monitoring content of a liquid filled tank is disclosed. The device comprises a base, configured to support the liquid filled tank. The device may further comprise a weight sensor, installed in the base, to perform weight measurements of the LFT. The device may further comprise a content monitoring module, to receive weight measurements from the weight sensor and identify the status of the LFT. The content monitoring module may calculate a depletion rate.

In some examples, the weight sensor may comprise a strain gauge. In some examples, the strain gauge may be a nanoparticle-based strain gauge. This may allow very fine weight measurements that may allow calculations indicative of a leak. For example, a depletion rate of between 10 g/h and 50g/h may be an indication of a leak whereas a depletion rate of between 100g/h and 200g/h may be an indication of regular use, e.g. cooking. Frequent measurements, e.g. once per minute, that may provide a depletion rate of between 10 g/h and 50g/h may be an indication of a leak if sustained for some time. For example, if after a series of measurements, e.g. ten measurements, the low depletion rate is maintained, then an alarm may be raised and the user or a back-end may be notified.

In some examples, the device may further comprise a transmitter to transmit status data to a back-end. The transmitter may be a Low Power Wireless Area Network (LPWAN) transmitter or an Ultra Narrow Band (UNB) transmitter. Example transmitter technologies may include, among others, SIGFOX, LoRA, Weightless, NB-IoT, etc.

In some examples, the transmitter may comprise means for attaching to the LFT. If the LFT is metallic, the transmitter may comprise a magnet to attach to the LFT.

In some examples the base may comprise ramps and a cylindrical area configured to match a cylindrical LFT. For example, two ramps may be bilaterally attached to the cylindrical area. This may facilitate mounting and unmounting of LFTs using a rolling movement, as some LFTs may be as heavy as 80-90 kg. The ramps may be of elastic material, e.g. rubber.

In another aspect, a content monitoring system is disclosed. The content monitoring system may comprise a device according to examples disclosed herein, and a back-end to receive the status data.

In another aspect, a computer program product is disclosed. The computer program product may comprise program instructions for causing a computing system to perform a method of content monitoring according to some examples disclosed herein.

The computer program product may be embodied on a storage medium (for example, a CD-ROM, a DVD, a USB drive, on a computer memory or on a read-only memory) or carried on a carrier signal (for example, on an electrical or optical carrier signal).

The computer program may be in the form of source code, object code, a code intermediate source and object code such as in partially compiled form, or in any other form suitable for use in the implementation of the processes. The carrier may be any entity or device capable of carrying the computer program.

For example, the carrier may comprise a storage medium, such as a ROM, for example a CD ROM or a semiconductor ROM, or a magnetic recording medium, for example a hard disk. Further, the carrier may be a transmissible carrier such as an electrical or optical signal, which may be conveyed via electrical or optical cable or by radio or other means.

When the computer program is embodied in a signal that may be conveyed directly by a cable or other device or means, the carrier may be constituted by such cable or other device or means.

Alternatively, the carrier may be an integrated circuit in which the computer program is embedded, the integrated circuit being adapted for performing, or for use in the performance of, the relevant methods.

### BRIEF DESCRIPTION OF THE DRAWINGS

Non-limiting examples of the present disclosure will be described in the following, with reference to the appended drawings, in which:
Figure 1 schematically illustrates a flow diagram of a method for monitoring content of a liquid filled tank, according to an example;
Figure 2 schematically illustrates a block diagram of a device for monitoring content of a liquid filled tank, according to an example.
Figure 3 schematically illustrates a liquid filled tank standing on a device for monitoring content of a liquid filled tank, according to an example.
Figure 3A schematically illustrates a bottom view of a device for monitoring content of a liquid filled tank, according to an example.
Figure 3B schematically illustrates a top view of a device for monitoring content of a liquid filled tank, according to an example.
Figure 3C schematically illustrates a detail of a device for monitoring content of a liquid filled tank, according to an example.
Figure 4A schematically illustrates a flow diagram of another method for monitoring content of a liquid filled tank, according to an example;
Figure 4B schematically illustrates a flow diagram of another method for monitoring content of a liquid filled tank, according to an example;
Figure 5 schematically illustrates a liquid filled tank content monitoring system, according to an example;
Fig. 6A-6D schematically illustrate a device for monitoring content of a LFT according to another example.

### DETAILED DESCRIPTION OF EXAMPLES

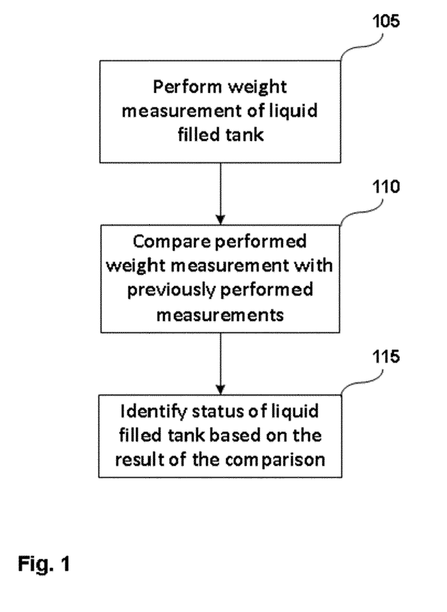

Figure 1 schematically illustrates a flow diagram of a method for monitoring content of a liquid filled tank, according to an example. In block 105, a weight measurement of the liquid filled tank may be performed. In block 110, the performed weight measurement may be compared with one or more previously performed measurements. In block 115, a status of the liquid filled tank may be identified based on the performed measurement comparison.

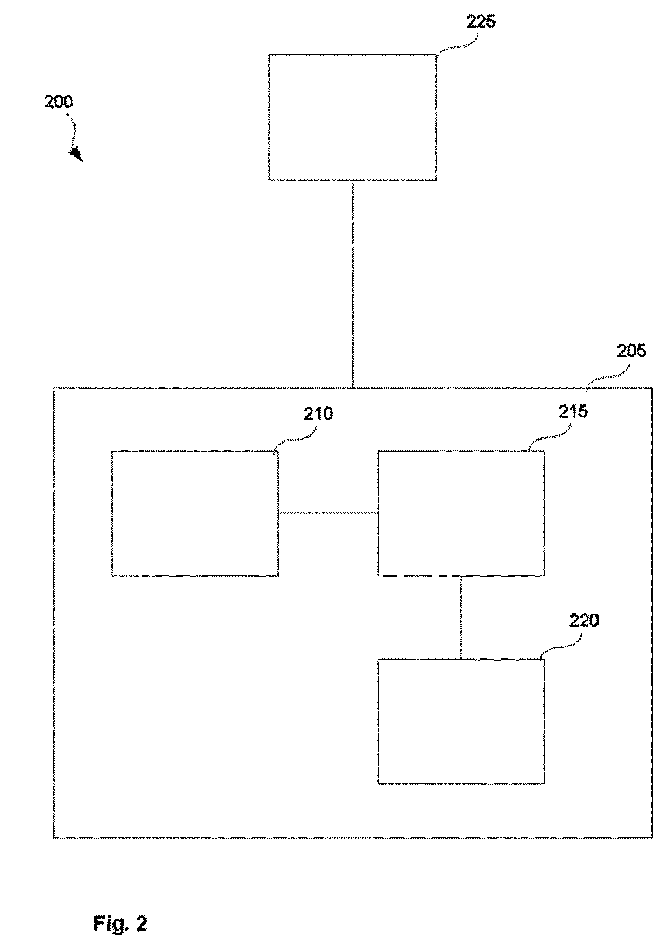

Figure 2 schematically illustrates a block diagram of a device for monitoring content of a liquid filled tank, according to an example. Device 200 may comprise a base 205. The base 205 may be configured to support an LFT. The base may comprise a casing and the casing may host a weight sensor 210, a content monitoring module 215 and a user interface 220. The content monitoring module 215 may be connected to the weight sensor 215 and to the user interface 220. The weight sensor 210 may be configured to measure a weight placed on top of the base. The weight sensor 210 may send weight measurement data to the content monitoring module 215. The weight sensor 210 may push weight measurements to the content monitoring module 215 when changes in weight are sensed or at regular intervals. Alternatively, the content monitoring module 215 may pull the information from the weight sensor 210 at regular intervals. The content monitoring module 215 may comprise a memory and a processor. The memory may store weight measurements and the processor may calculate weight reduction or depletion rates, exhaustion times, depletion patterns etc. The user interface may comprise a display and the content monitoring module 215 may display the results of the calculations at the display.

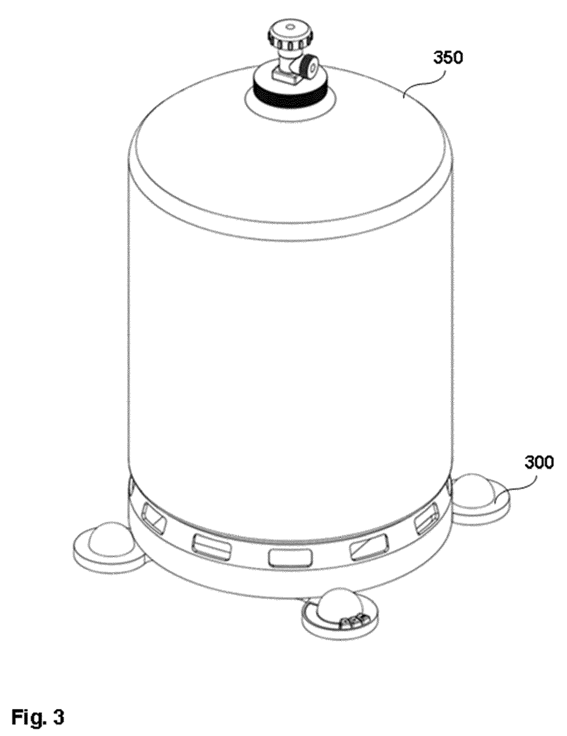

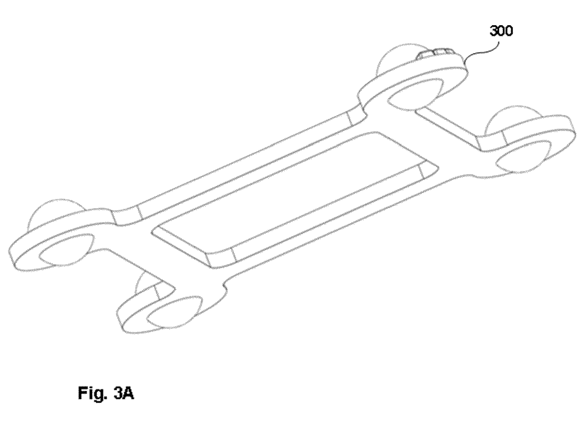

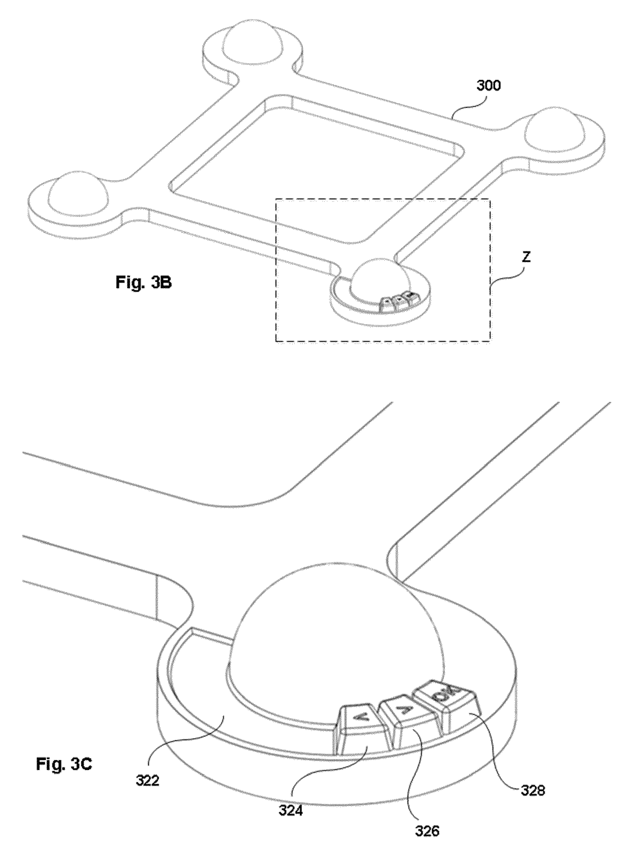

Figure 3 schematically illustrates a liquid filled tank standing on a device for monitoring content of a liquid filled tank, according to an example. The LFT 350 may be an LPG or an LNG. It may, for example, contain Butane or Propane. The net weight of a full tank may not be limited but typical ranges of tanks (or cylinders) range between 5 kg to 90 kg. The LFT 350 may be connectable to a domestic, commercial or industrial installation. The device 300 may comprise a rectangular frame with donut-shaped bearings protruding at the corners of the rectangular frame. Each donut shaped bearing may host a ball-shaped wheel to allow rolling of the base in two dimensions. The device 300 may comprise a weight sensor. The weight sensor may be a strain gauge. The strain gauge may be a metallic strain gauge, a semiconductor strain gauge or a nanoparticle-based strain gauge. Metallic strain gauges have a small sensitivity (gauge factor = 2) but have a significant strain range (typically ± 3%). On the contrary semiconductor strain gauges have a higher sensitivity (gauge factor ∼ 100) but a smaller strain range (typically ±0.5%). Nanoparticle-based strain gauges may have an active area made of a compact assembly of nanoparticles, e.g. gold nanoparticles. As a consequence they may combine a high sensitivity (gauge factor ∼ 50), because of the tunnel mechanisms governing their electrical properties with a significant deformation range (typically ± 3%). Because of their high impedance (typically 1 MOmhs) they may also have a small electrical consumption which allows them to be deployed as non-invasive sensors.

Figure 3A schematically illustrates a bottom view of a device for monitoring content of a liquid filled tank, according to an example. The frame of the device 300 may have an opening in the center. The sides of the frame may also be adjustable. This may allow different sizes of LFTs to fit on the same device. However, in other examples, the frame may be custom made to fit a specific size, e.g. a standard size, of an LFT.

Figure 3B schematically illustrates a top view of a device for monitoring content of a liquid filled tank, according to an example. One of the donut-shaped protrusions may host the user interface. This is indicated by rectangular zone Z.

Figure 3C schematically illustrates a detail of a device for monitoring content of a liquid filled tank, according to an example. The detail of Figure 3C corresponds to zone Z of Fig. 3B. The user interface of the device 300 may comprise a display 322 and selection buttons 324,326 and 328. The selection buttons 324 and 326 may be used to navigate a menu that may be visible on the display 322. The button 328 may be used to select from the menu shown on the display. For example, when a new LFT is installed, the device may measure the weight of the LFT and identify that a new LFT has been placed. This may be indicated on the display. The user may confirm that a new LFT has been placed by pressing the button 328. Then the device may require the user to confirm the type of LFT that has been installed. Based on the weight, the device may provide a suggestion to the user on the display. The user may press button 328 if the suggestion corresponds to the LFT installed. Otherwise, the user may navigate a menu of possible LFT types using buttons 324 and 326 (that correspond to left and right navigation buttons) until an LFT type that corresponds to the one installed has been identified. Then the user may select the correct LFT type using button 328.

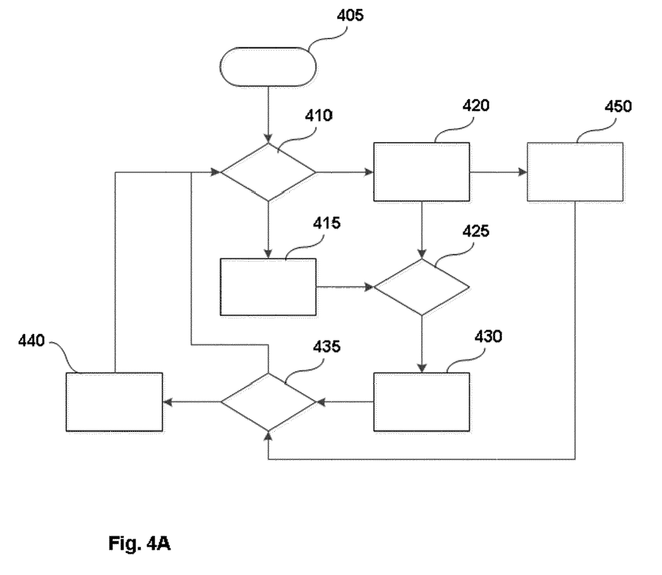

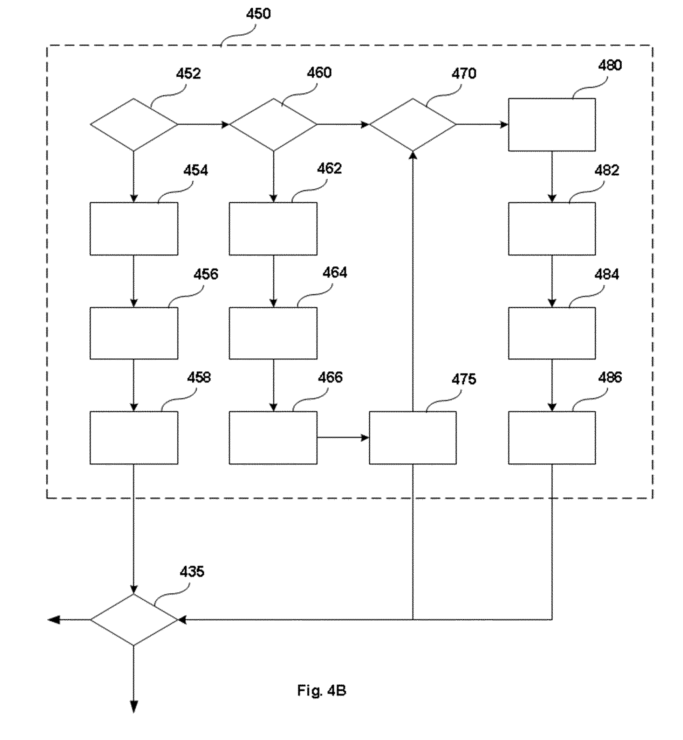

Figure 4A schematically illustrates a flow diagram of another method for monitoring content of a liquid filled tank, according to an example. In block 405, the process may start by, e.g. powering on the device. Then in decision box 410 the device may identify movement or vibrations. This may be identified as unstable weight measurements. If there are no unstable weight measurements then the process may continue to block 415 and perform a stable weight measurement. If there are such unstable weight measurements, then the process continues to block 420, where the device may wait until the unstable situation (vibration or movement) stops. Then it may proceed to block 415. After a weight measurement is performed, the process may continue to block 425 where the weight value of the performed measurement will be compared to the previous recorded weight measurement value. If the two values are the same, i.e. if there is no difference, then the process continues to block 430, which corresponds to a sleep cycle. This cycle may be static or dynamic and its duration may depend on one or more of several parameters. For example, it may depend on a detected usage pattern, on a minimum period to detect a leak, on current battery level and/or on user settings. When out of the sleep cycle, the process may continue to decision box 435. It may then decide if it is time to send a regular update to the back-end server. If the answer is yes, then the process continues to block 440 and status information is sent to back end server. Otherwise, the process continues with block 410. Now if after a weight measurement it is found, in block 425, that there is difference between the current weight measurement value and the previous weight measurement value, then the process may continue to block 450. Block 450 is a status update block and shall be described in detail with reference t Fig. 4B.

Figure 4B schematically illustrates a flow diagram of a status update process in a method for monitoring content of a liquid filled tank, according to an example. Fig. 4B is a detailed explanation of block 450 of Fig. 4A. When a different weight measurement value is identified, compared to the previous weight measurement value, then the process continues to block 452. There it may be checked if a new container has been installed. For example, if the detected current weight measurement value is higher than the previous weight measurement value, the user may be asked, in block 454, to confirm the new container by filling in (e.g. by selecting from a menu on the display) brand, model and tare. Alternatively or additionally, a default container type may be provided and the user may confirm or reject the provided container type. Additionally the user may provide an indication of inventory or stock. That is, the number of LFTs (cylinders or containers) available so that the back end may be informed in case an order is to be scheduled. In block 456 the user may input information about the new container and then the process may continue to block 458. In block 458, the information about the new container may be transmitted to the back end. The process may then continue back to block 435.

If, in block 452, the detected current weight measurement value is lower than the previous weight measurement value then the process may continue in block 460. There it may be first checked if the difference may be attributed to a leak. In block 460, it may be checked if a continuous descending trend (depletion rate) is incompatible with past usage patterns or is within a predetermined depletion rate that may be associated with a leak. The leak calculation or estimation may be performed locally based on user input, settings and consumption history. However, as the depletion rate during a leak may be relatively small, e.g. in the order of a few grams per hour, a high sensitivity weight sensor, e.g. a nanoparticle-based sensor, may be required to provide such accuracy. Now, if, as a consequence of the depletion rate calculated, a potential leak is identified, then the process may continue to block 462 where the potential leak information may be displayed. Then in block 464 the user's input may be required to confirm receipt of the warning message. In block 466, following the user's input, data related to the leak, e.g. leak rate and time of measurement, may be sent to the back end. The process may then continue to block 475, where the measurements and leak data may be stored locally in a memory. Now if no leak is detected in block 460, then the process may continue to decision block 470, where it may be checked if the identified weight reduction may be attributed to normal consumption. For example, this will be the case if the depletion rate is within rates corresponding to heating or cooking applications. If the answer is yes, then the measurements are stored in the memory in block 475. From block 475 the process may continue to block 435. Now if the consumption may not be considered normal, then the process may continue to block 480. In block 480, an anomalous behavior or a malfunction may be registered and then, in block 482, an error code may be displayed. In block 484, the user may be requested to confirm that he/she has taken note of the malfunction. Then, in block 486, the malfunction properties (e.g. the error code) may be transmitted to the back end. The process may then continue to block 435. Under block 435, the process may employ an algorithm in order to minimize the quantity of information sent to the back-end but also to maintain enough granularity for prediction purposes. For example, according to the algorithm, under block 35 the process may:
- Provide more frequent updates when the weight measured is closer to a low threshold
- Provide more frequent updates when the usage pattern is not respected
- Provide less frequent updates if no consumption is detected for a period of time
- Provide updates during time of day where sending of information is likely to be minimal to avoid saturation (e.g. around 4:00 AM)
- Provide more frequent updates when the setup is new and no historic data is available.

All transmissions and user inputs may be performed to or through the back end or to or through a user's mobile device. In some examples, the user's mobile device may incorporate functionality of the back end. In other examples, the back end may communicate to the user's mobile device. In other examples, the weight measurement device may communicate with the user's mobile device directly. The user's mobile device may comprise a mobile application that may be linked to one or more weight measurement devices and/or with the back end.

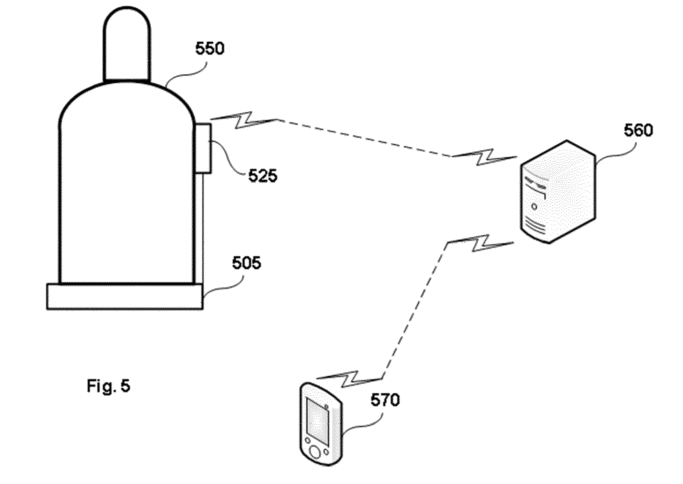

Figure 5 schematically illustrates a liquid filled tank content monitoring system, according to an example. A weight measurement device 505 may comprise a base and transmitter 525. The transmitter may be attached to a LFT 550. The transmitter 525 may transmit status information to a back end server 560. The transmitter 525 may be equipped with a low power wide area network transmitter, for example a SIGFOX transmitter. To avoid interference from the LFT 550, the transmitter may be placed on a side of the LFT that is closer to the receiver of the back end 560. To identify an area on the LFT to place the transmitter, the user may use the mobile application. The user may provide the location of the weight measurement device and/or mobile device to the mobile application. Alternatively, the mobile application may determine the location from the mobile device's (e.g. smartphone) location detection hardware and software (e.g. GPS). By providing the location to the back end server, the back end server may similarly acquire the location of the back end receiver and generate a "line of sight" between the mobile device (and/or the LFT) and the back end receiver. By providing an indication of direction of such "line of sight" the user may place the transmitter on the LFT in such a way as to avoid the "line of sight" from passing through the LFT.

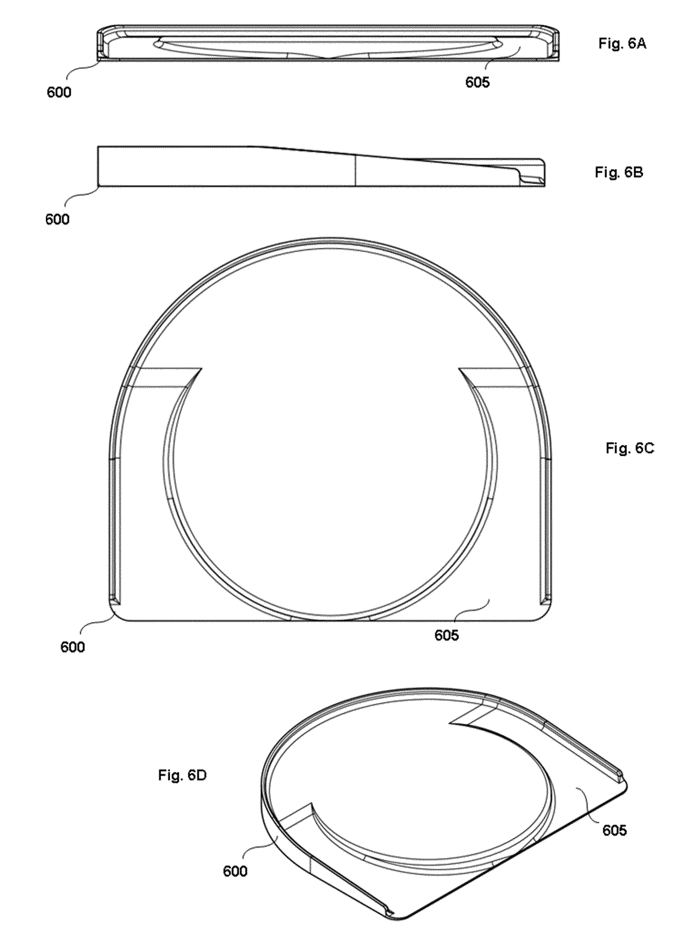

Fig. 6A-6D schematically illustrate a device for monitoring content of a LFT according to an example. Fig. 6A is a front view of the device according to the example. The device 600 may comprise a base. The base may have a squared side and a circular side. A pair of ramps 605 may be at the same level with the ground at the squared side and may lead to an upper plateau at the circular side. Between the ramps, a cylindrical area may extend vertically from the bottom level of the ramps to the plateau level. The cylindrical area may be configured to host a bottom side of a cylindrical LFT, e.g. an LPG or an LNG or a beer keg. The proposed ramp design may facilitate mounting and unmounting of the LFT to the device 600. During mounting, the LFT may be rolled onto the ramps until the bottom of the LFT matches the cylindrical interior of the device. During unmounting, a reverse movement may be employed. Large tanks may be quite heavy (in the order of 80/90 kg when full) and the space to maneuver them may be sometimes reduced. Thus, any LFT irrespective of weight may be easily engaged with the device 600 without the need to lift and drop, which could be an effort for the person involved and a stress to the device 600. The ramps may be made of elastic material, e.g. rubber, to even further reduce the stresses on the device thus providing resistance to impact. The device may further comprise a weight sensor that may be hosted in the cylindrical area, a content monitoring module, below the plateau, and a user interface at the side of the plateau. Their functionality may be similar to the one presented with other examples disclosed herein.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow. If reference signs related to drawings are placed in parentheses in a claim, they are solely for attempting to increase the intelligibility of the claim, and shall not be construed as limiting the scope of the claim.

Further, although the examples described with reference to the drawings comprise computing apparatus/systems and processes performed in computing apparatus/systems, the invention also extends to computer programs, particularly computer programs on or in a carrier, adapted for putting the system into practice.

## Claims

1. A method of monitoring content of a liquid filled tank, comprising:
performing a weight measurement of the liquid filled tank;
comparing said performed weight measurement with one or more previously performed measurements;
identifying a status of the liquid filled tank based on said comparing.

2. The method of content monitoring according to claim 1, wherein identifying a status of the liquid filled tank comprises identifying a remaining quantity of liquid in the liquid filled tank.

3. The method of content monitoring according to claim 2, further comprising calculating a depletion rate.

4. The method of content monitoring according to claim 3, further comprising identifying an approximate exhaustion time of the liquid filled tank based on the calculated depletion rate.

5. The method of content monitoring according to claim 3, further comprising identifying a leaking status based on the calculated depletion rate.

6. The method of content monitoring according to any of claims 1 to 5, further comprising transmitting the status of the liquid filled tank to a back-end.

7. The method according to claims 6, wherein transmitting comprises identifying a location of the LFT;
identifying a receiver location of the back-end;
identifying an interference-free position on the LFT to place the transmitter;
placing the receiver on the identified interference-free position on the LFT.

8. The method according to claim 14, wherein identifying an interference-free position on the LFT comprises
identifying an external area of the LFT where any direct line from the receiver location does not pass through the LFT
selecting a position on the identified LFT external area.

9. A device for monitoring content of a liquid filled tank, comprising:
a base configured to support the liquid filled tank;
a weight sensor, installed in the base, to perform weight measurements of the LFT;
a content monitoring module, to receive weight measurements from the weight sensor and calculate a depletion rate.

10. The device according to claim 9, wherein the weight sensor comprises a strain gauge.

11. The device according to claim 10, wherein the strain gauge comprises a nanoparticle-based strain gauge.

12. The device according to any of claims 9 to 11, wherein the base comprises ramps and a cylindrical area configured to match a cylindrical LFT.

13. The device according to any of claims 9 to 12, further comprising a transmitter to transmit status data to a back-end.

14. The device according to claim 13, wherein the transmitter is a low power wireless area network transmitter.

15. A content monitoring system comprising
a device according to any of claims 13 to 14,
a back-end to receive the status data.
